# EUROPÄISCHE PATENTANMELDUNG

(11) **EP 2 703 057 A2**
(43) Veröffentlichungstag der Anmeldung: **05.03.2014**
(21) Anmeldenummer: 13003995.1
(22) Anmeldetag: 09.08.2013
(51) Int. Cl.: B01D 39/16

(54) **Fluidreiniger**

(30) Priorität: 03.09.2012 DE 102012017315
(71) Anmelder: Carl Freudenberg KG, 69469 Weinheim (DE)
(72) Erfinder: Fischer, Thomas, 64285 Darmstadt (DE); Clasen, Hannes, 48143 Münster (DE); Felber, Uwe, 69518 Abtsteinach (DE); Leister, Klaus, 69469 Weinheim (DE)

(57) **Zusammenfassung**

Ein Filtermodul (1) zum Reinigen eines Fluides, umfassend ein Gehäuse (2) mit einer Einlassöffnung (3) und einer Auslassöffnung (4), wobei das Gehäuse (2) einen Aufnahmeraum (5) ausbildet, in dem mindestens ein Filterelement (6) aufgenommen ist, wobei das Filterelement (6) ein Filtermedium (7) aufweist, welches blockartig ausgestaltet ist, ist im Hinblick auf die Aufgabe, ein Filtermodul derart zu gestalten, dass das Totvolumen im Gehäuse möglichst gering ist, dass das Filtermodul über eine gute Filterleistung verfügt und eine kostengünstige sowie zeitsparende Herstellbarkeit und ein effektiver Einsatz eines Filtermediums gegeben ist, dadurch gekennzeichnet, dass das Filtermedium (7) plissiert und zu einem Block (8) zusammengeschoben ist.

## Beschreibung

### Technisches Gebiet

Die Erfindung betrifft ein Filtermodul gemäß dem Oberbegriff des Patentanspruchs 1.

### Stand der Technik

Aus der DE 10 2009 016 739 A1 sind Gehäuse mit einer Einlassöffnung und einer Auslassöffnung bekannt, wobei das Gehäuse einen Aufnahmeraum ausbildet, welcher ein zickzackartiges Filterelement beinhaltet. Dieses filtert Partikel und Gase zum Beispiel aus einem Zuluftstrom für eine Brennstoffzelle.

Bei einem zickzackartigen Filterelement sind die Faltenwände teilweise relativ weit beabstandet. Bei dieser Ausführung des Filterelements ist nachteilig, dass aufgrund der weiten Beabstandung der Faltenwände ein großes Totvolumen im Gehäuse vorhanden ist.

### Darstellung der Erfindung

Der Erfindung liegt daher die Aufgabe zugrunde, ein Filtermodul derart zu gestalten, dass das Totvolumen im Gehäuse möglichst gering ist. Desweiteren soll das Filtermodul über eine gute Filterleistung verfügen. Weitere Anforderungen, die das Filtermodul erfüllen soll, sind eine kostengünstige sowie zeitsparende Herstellbarkeit und der effektive Einsatz eines Filtermediums.

Die vorliegende Erfindung löst die zuvor genannte Aufgabe durch ein Filtermodul mit den Merkmalen des Patentanspruchs 1.

Danach ist das Filtermodul dadurch gekennzeichnet, dass das Filtermedium plissiert und zu einem Block zusammengeschoben ist.

Erfindungsgemäß ist erkannt worden, dass ein Filtermodul mit einem blockartigen Filterelement ein geringes Totvolumen im Gehäuse erzeugt. Dies ermöglicht ein optimales Verhältnis von Volumen des Gehäuses zu Adsorbervolumen. Aufgrund des größeren Adsorbervolumens des Filterelements wird eine erhöhte Adsorptionskapazität und bessere Filterleistung erreicht. Weiterhin ist erkannt worden, dass für das erfindungsgemäße Filtermodul hohe Kosten für das Zuschneiden einzelner Schichten und zum Verkleben bzw. Verbinden dieser Schichten entfallen. Dies ist auf den Aufbau des Filterelements aus nur einem Block zurückzuführen. Die Kombination einer blockartigen und plissierten Ausgestaltung führt zu einem flexiblen Filterelement. Ferner füllt das Filterelement den Gehäuseraum optimal aus. Vorteilhaft ist auch, dass plissierte Filterelemente kommerziell problemlos erhältlich sind und durch wenige Handgriffe einsetzbar sind. Weiter ist vorteilhaft, dass plissierte Filterelemente unter Entfaltung einer Klemmwirkung in das Gehäuse einsetzbar sind und über hervorragende dichtende Eigenschaften verfügen.

Folglich ist die eingangs genannte Aufgabe gelöst.

Der Block könnte frei von einem Rahmenelement angeordnet sein, welches das Filtermodul fixiert. In einer weiteren Ausführungsform ist der Block ohne eine Leimkante ausgestaltet. Dieser Aufbau ermöglicht einen materialsparenden Einsatz und nutzt den Bauraum effektiv und sparsam aus.

Das Filterelement könnte eine Länge im Bereich von 10 bis 100 mm aufweisen, bevorzugt im Bereich von 20 bis 90 mm, insbesondere im Bereich von 30 bis 80 mm. Die für solche Filtergrößen typischen Volumenströme erlauben optimale Strömungsverhältnisse.

Das Filtermedium könnte eine erste Schicht aufweisen, die als Trägerlage ausgebildet ist, und könnte eine zweite Schicht aufweisen, die ein Fluid adsorptiv reinigt. Unter adsorptiver Reinigung wird die Entfernung von Verunreinigungen und Schadstoffen mittels Absorption, Adsorption, Physisorption, Chemisorption und/oder Katalyse verstanden. Der Begriff Adsorption wird im Folgenden als Oberbegriff für die oben genannten Mechanismen verwendet.

Es können eine Vielzahl verschiedener Arten von Schichten verwendet werden. Dies ermöglicht einen vielseitigen Einsatz. Es könnte eine erste Schicht als Partikelfilterschicht ausgestaltet sein. Dies erhöht die Filtereffektivität, da durch die erste Schicht Partikel entfernt werden. Die zweite Schicht ist in der Lage, unerwünschte chemische Substanzen, gasförmige Verunreinigungen und Schadstoffe, insbesondere Farb-, Geruchs- und Geschmackstoffe, aus dem Gas abzutrennen. Insbesondere können mit der zweiten Schicht, gasförmige Verunreinigungen, wie Kohlenwasserstoffe, Ammoniak, Stickoxide (NOₓ-Gase) und schwefelhaltige Komponenten, entfernt werden. Eine unterschiedliche Funktionalisierung der Schichten erlaubt einen vielseitigen Einsatz des Filtermoduls.

Das Filtermedium könnte aus einer ersten Schicht aus Vliesstoff bestehen, auf welcher eine zweite Schicht aus Adsorbermaterial aufgebracht ist. Dies ermöglicht eine kostengünstige Herstellung einer luftdurchlässigen Schicht, die einen niedrigen Strömungswiderstand aufweist. Darüber hinaus sind Vliesstoffe kommerziell problemlos erhältlich. Der Vliesstoff könnte vorteilhaft aus synthetischen, insbesondere thermoplastischen, Fasern bestehen. Die Adsorberschicht entfernt Schadgase. Durch die spezielle Ausrichtung des Filterelements wird eine höhere Schadgaskapazität erreicht, wodurch die Standzeit des Filtermediums erhöht werden kann. Unter Schadgaskapazität wird die Fähigkeit eines Adsorbermaterials verstanden, Schadgase zu adsorbieren. Dies erhöht die Filterleistung. Je nach Wahl des Adorbermaterials können saure und/oder basische Gase oder Kohlenwasserstoffe entfernt werden. Dies schützt zum Beispiel vor einem frühzeitigen Leistungsabfall einer Brennstoffzelle, da diese Gase eine schädliche Wirkung auf die Brennstoffzellen haben können.

Als Adsorbermaterial kann zum Beispiel Aktivkohle verwendet werden. Weitere denkbare Adsorbermaterialien sind imprägnierte Aktivkohlen, Siliciumdioxide, Aluminiumsilikate, Aluminiumoxide oder Ionenaustauscher einzeln oder in Mischungen.

Das Filtermedium könnte als zu einem Block gesintertes Material ausgestaltet sein. Die Sinterung bewirkt eine Stabilisierung des Filtermediums.

Ferner könnten Lagen aus unterschiedlichen Filtermedien, wie zum Beispiel plissierten Lagen, flächigen Filterlagen und/oder gesinterten Blöcke, miteinander kombiniert werden.

An das Filtermedium könnte sich einlassseitig und/ oder auslassseitig mindestens eine flächige Filterlage anschließen. Diese flächige Filterlage direkt am Eingangsstrom schützt das nachfolgende Filtermedium vor größeren Partikeln. Weiterhin nutzen flächige Filterlagen den Bauraum effektiv aus. Desweiteren kann die flächige Filterlage gleichzeitig eine dichtende Wirkung besitzen und Leckagen- und Bypassbildungen vermeiden. In einer Ausführungsform könnten die flächigen Filterlagen auf Anström- und Abströmseite unterschiedliche Porosität aufweisen. Vorteilhaft ist eine Anströmseite mit größeren offenen Poren ausgebildet, da mit diesen Staubpartikel gut entfernt werden können.

Gemäß einer weiteren Ausführungsform ist eine Filterlage als chemischer Filter, insbesondere als Absorptionsfilter, ausgestaltet.

Mindestens eine Filterlage könnte mit dem Gehäuse formschlüssig verbunden sein. Durch die formschlüssige Verbindung der Filterlage mit dem Gehäuse kann das Bilden von Leckagen und Bypässen wirksam verhindert werden. Bei einer formschlüssigen Verbindung ist von Vorteil, dass kein zusätzlicher Klebstoff zum Verbinden notwendig ist.

Die dem Einlass zugewandte oberste Filterlage könnte als Grobfilter ausgestaltet sein. Dieser könnte progressiv aufgebaut sein, wodurch vorteilhaft ein geringer Druckanstieg durch die Einlagerung von Partikeln im Grobfilter erzeugt wird. Dies ermöglicht eine längere Lebensdauer des Filtermoduls. Grobe Partikel bzw. Teilchen werden im Grobfilter abgetrennt. In den nächsten Filterlagen kann die Abtrennung kleinerer feinerer Partikel oder die adsorptive Reinigung erfolgen.

Auch Salze können durch geeignetes Filtermedium aus der Zuluft entfernt werden. Diese schädigen beispielsweise eine Brennstoffzelle erheblich.

An den Grobfilter könnte sich ein Feinfilter anschließen, wodurch die Abtrennung der kleineren und feineren Partikel erfolgt. Hierdurch werden ein Zusetzen des Filterelements und ein damit verbundener Anstieg des Druckverlusts verlangsamt. Weiterhin werden die nachfolgenden Filterlagen vor Beschädigung durch größere Partikel, wie zum Beispiel Steinen, geschützt.

Der Grobfilter weist einen größeren mittleren Porenradius als der Feinfilter auf.

Die dem Auslass zugewandte unterste Filterlage könnte als Schutzlage ausgestaltet sein. Diese Schutzlage verhindert, dass eventuell austretendes Adsorbermaterial aus dem adsorptiven Filter aus der Reinluftseite des Filtergehäuses austritt.

Das Gehäuse könnte einlassseitig mit einem Abdeckrahmen versehen sein, welcher das Filterelement innerhalb des Gehäuses verliersicher fixiert. Dies ermöglicht eine kostengünstige und rasche Montage des Filterelements.

Der Abdeckrahmen könnte mit dem Gehäuse formschlüssig und/oder stoffschlüssig verbunden sein. Bei einer formschlüssigen Verbindung ist von Vorteil, dass kein zusätzlicher Klebstoff zum Verbinden notwendig ist. Folglich besteht die Gefahr nicht, dass das Filtrat bzw. das zu trennende Gas mit dem Klebstoff reagiert. Eine stoffschlüssige Verbindung fixiert den Rahmen sicher am Gehäuse.

Der Abdeckrahmen könnte Fluideinlassöffnungen aufweisen. Diese Fluideinlassöffnungen ermöglichen einen problemlosen Lufteintritt.

Das Gehäuse könnte Rippen aufweisen, wobei ein Ende der Rippen in das Gehäuse mündet und das andere Ende der Rippen frei vorliegt. Die Rippen können als dünne Platten ausgebildet sein, wobei diese unterschiedliche Längen aufweisen. Durch eine schräge Anordnung der Rippen relativ zur Gehäusewand verringert sich der Abstand der Rippen untereinander am offenen Ende der Rippen. Vorteilhafterweise ermöglichen diese Rippen eine homogene Durchströmung des Filterelements. Diese führen zu optimalen Strömungsverhältnissen und verbessern die Filterleistung zusätzlich. Ferner stützen die Rippen das Filterelement.

Je nach Wahl der Verfahrensparameter kann im Aufnahmeraum, nämlich im Strömungsraum, ein Unterdruck erzeugt werden, wodurch die Durchströmung des Filtermediums homogener wird.

Das Filtermodul könnte in einer Brennstoffzelle verwendet werden. Aufgrund seiner erhöhten Adsorptionskapazität und Lebensdauer eignet sich das Filtermodul hervorragend als Filtermodul für eine Brennstoffzelle.

Eine Brennstoffzelle könnte ein Filtermodul der zuvor beschriebenen Art umfassen. Das Filtermodul ist aufgrund seiner erhöhten Filterleistung hervorragend als Filtermodul für eine Brennstoffzelle geeignet.

### Kurzbeschreibung der Zeichnung

In der Zeichnung zeigen
- Fig. 1: ein Filtermodul mit einem plissierten Filterelement, welches in das Gehäuse als Block eingeklemmt ist,
- Fig. 2: eine perspektivische Ansicht des Gehäuses des Filtermoduls gemäß Fig. 1,
- Fig. 3: eine weitere perspektivische Ansicht des Gehäuses des Filtermoduls gemäß Fig. 1 mit strichliert dargestellten Strukturen,
- Fig. 4: eine Draufsicht auf den Aufnahmeraum des Filtermoduls gemäß Fig. 1 und
- Fig. 5: eine Draufsicht auf den Aufnahmeraum des Filtermoduls gemäß Fig. 1, in welcher Strukturen strichliert dargestellt sind, die durch den Abdeckrahmen verdeckt sind.

### Ausführung der Erfindung

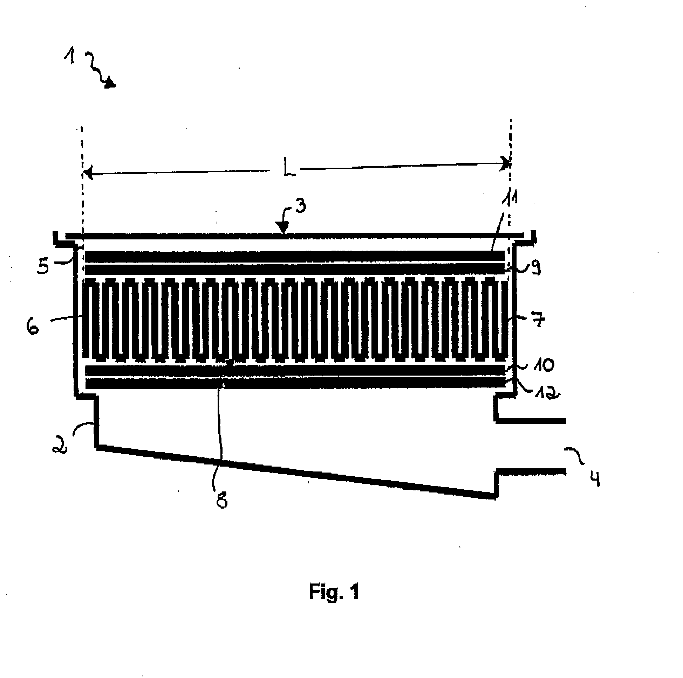

Fig. 1 zeigt ein Filtemodul 1 zum Reinigen eines Fluides, umfassend ein Gehäuse 2 mit einer Einlassöffnung 3 und einer Auslassöffnung 4, wobei das Gehäuse 2 einen Aufnahmeraum 5 ausbildet, in dem mindestens ein Filterelement 6 aufgenommen ist. Das Filterelement 6 weist ein Filtermedium 7 auf, welches blockartig ausgestaltet ist. Das Filtermedium 7 ist plissiert und zu einem Block 8 zusammengeschoben.

Das Filterelement 6 weist eine Länge L im Bereich von 10 bis 100 mm auf. In diesem konkreten Fall beträgt die Länge L des Filterelements 6 90 mm.

Der Block 8 ist frei von einem Rahmenelement angeordnet, welches das Filtermodul 1 fixiert.

Das Filtermedium 7 weist eine erste Schicht auf, die als Trägerlage ausgebildet ist, und weist eine zweite Schicht auf, die ein Fluid adsorptiv reinigt.

Das Filtermedium 7 besteht aus einer ersten Schicht aus dünnem Vliesstoff, auf welcher eine zweite Schicht aus Adsorbermaterial aufgebracht ist.

An das Filtermedium 7 schließen sich einlassseitig eine obere flächige Filterlage 9 und auslassseitig eine untere flächige Filterlage 10 an.

Die untere flächige Filterlage 10 ist als Partikelfilter ausgestaltet.

Eine dem Einlass 3 zugewandte oberste Filterlage 11 ist als Grobfilter ausgestaltet.

An den Grobfilter schließt sich ein nicht gezeigter Feinfilter an.

Eine dem Auslass 4 zugewandte unterste Filterlage 12 ist als Schutzlage ausgestaltet.

Vor der untersten Filterlage 12 ist eine nicht gezeigte adsorptive Filterlage angeordnet.

Mindestens eine oberste Filterlage 11 ist mit dem Gehäuse 2 formschlüssig verbunden.

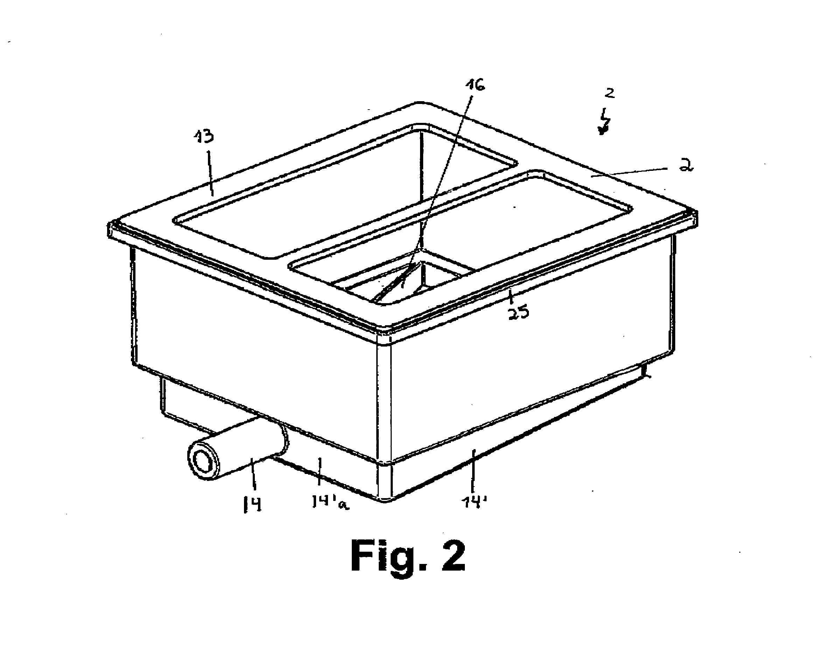

Fig. 2 zeigt ein Gehäuse 2. Dieses Gehäuse 2 ist einlassseitig mit einem Abdeckrahmen 13 versehen, welcher das mindestens eine Filterelement 6 innerhalb des Gehäuses 2 verliersicher fixiert.

Der Abdeckrahmen 13 ist mit dem Gehäuse 2 formschlüssig verbunden und der Abdeckrahmen 13 weist einen überstehenden Flanschrand 25 auf.

Das Gehäuse 2 ist im wesentlichen quaderförmig ausgestaltet.

Weiterhin umfasst das Gehäuse 2 einen Strömungsraum 14'. Am Gehäuse 2 ist auf der Vorderseite 14'a des Strömungsraums 14' ein Strömungsstutzen 14 ausgebildet. Der Strömungsstutzen 14 ragt vom Strömungsraum 14' ab.

Der Strömungsraum 14' verjüngt sich entgegen der Strömungsrichtung des Fluids.

Der Strömungsraum 14' weist Rippen 16 auf.

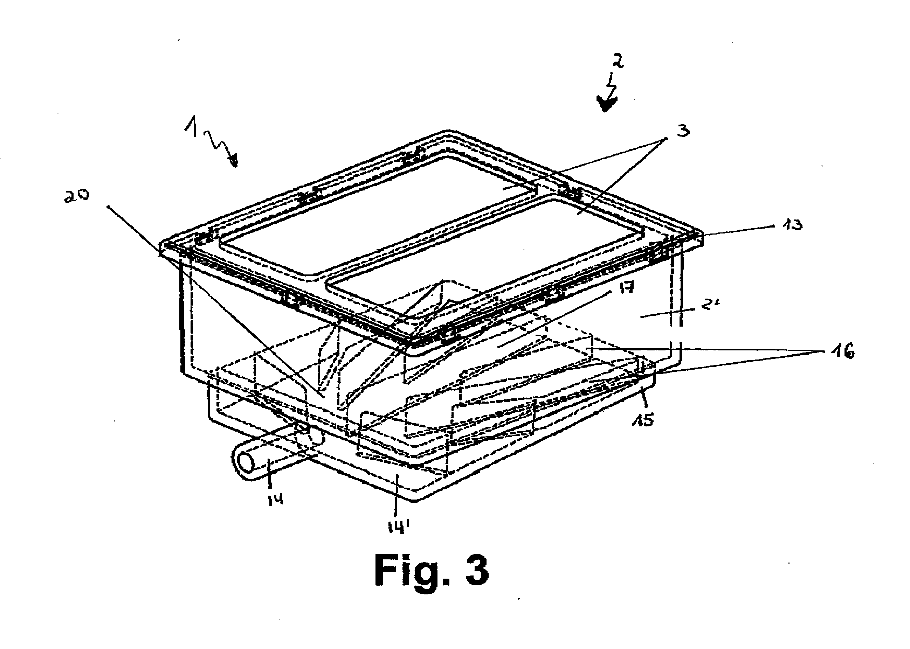

Fig. 3 zeigt ein Gehäuse 2 des Filtermoduls 1- Dieses Gehäuse 2 ist einlassseitig mit einem Abdeckrahmen 13 versehen.

Das Gehäuse 2 umfasst einen Strömungsraum 14'. Am Gehäuse 2 ist auf der Vorderseite 14'a des Strömungsraums 14' ein Strömungsstutzen 14 ausgebildet.

Der Strömungsstutzen 14 ragt vom Strömungsraum 14' ab.

Das Gehäuse 2 weist im Strömungsraum 14' Rippen 16 auf, wobei ein Ende der Rippen 16 in das Gehäuse 2 mündet und das andere Ende der Rippen 16 frei vorliegt. Diese Rippen 16 sind unterschiedlich lang. Mit Ausnahme einer mittleren Rippe 17 sind die übrigen Rippen 16 relativ zu einer von den Wandungen 2' nach innen abgesetzten Gehäusewand 15 schräg angeordnet. Sie verlaufen zur mittleren Rippe 17 hin. Diese Rippen sind auf dem Boden 20 des Strömungsraums 14' angeordnet.

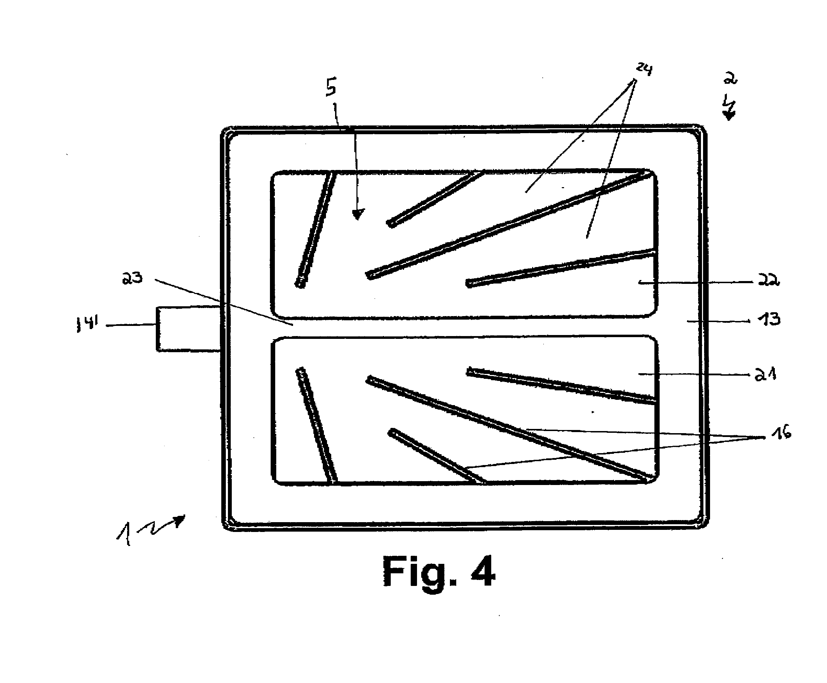

Fig. 4 zeigt eine Draufsicht des Filtergehäuses 2 und des Aufnahmeraums 5 des Filtermoduls 1. Am Gehäuse 2 ist auf der Vorderseite des Gehäuses 2 ein Strömungsstutzen 14' angeordnet.

Der Abdeckrahmen 13 weist Fluideinlassöffnungen 21, 22 auf. Diese Fluideinlassöffnungen 21, 22 sind quaderförmig ausgestaltet.

Das Gehäuse 2 weist Rippen 16 auf, wobei ein Ende der Rippen frei vorliegt. Diese Rippen 16 sind unterschiedlich lang und verlaufen zu einem Mittelschenkel 23 des Abdeckrahmens 13 hin.

Die Anordnung der Rippen 16 unterteilt den Strömungsraum 14' in einzelne Strömungsfelder 24.

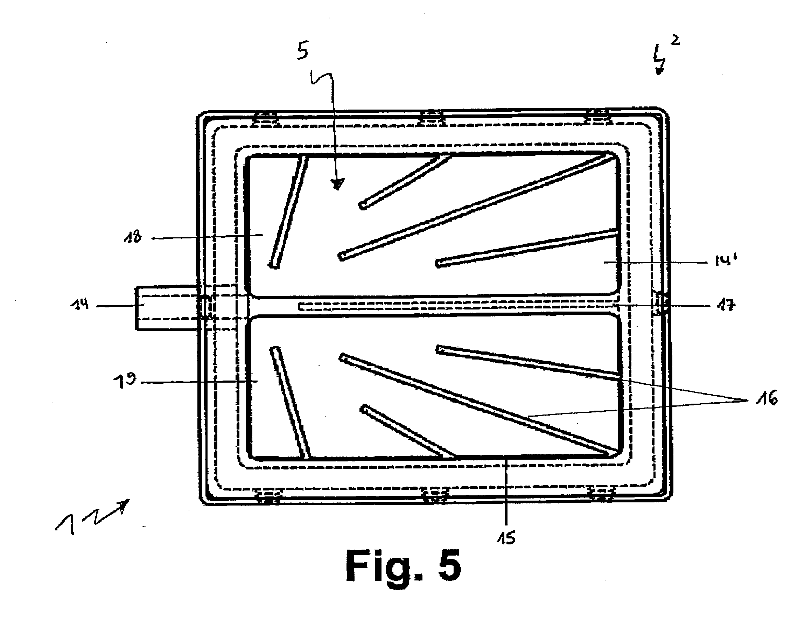

Fig. 5 zeigt eine Draufsicht auf das Gehäuse 2 und den Aufnahmeraum 5 des Filtermoduls 1.

Am Gehäuse 2 ist auf der Vorderseite 14'a des Strämungsraums 14' ein Strömungsstutzen 14 ausgebildet.

Dieses Gehäuse 2 weist Rippen 16 auf, wobei ein Ende der Rippen 16 in das Gehäuse 2 mündet und das andere Ende der Rippen 16 frei vorliegt. Diese Rippen 16 sind unterschiedlich lang. Mit Ausnahme einer mittleren Rippe 17 sind die übrigen Rippen 16 relativ zur Gehäusewand 15 schräg angeordnet. Sie verlaufen zur mittleren Rippe 17 hin. Die mittlere Rippe 17 unterteilt teilweise durch ihre Anordnung im Gehäuse 2 den Strömungsraum 14' in zwei Bereiche 18 und 19.

## Patentansprüche

1. Filtermodul (1) zum Reinigen eines Fluides, umfassend ein Gehäuse (2) mit einer Einlassöffnung (3) und einer Auslassöffnung (4), wobei das Gehäuse (2) einen Aufnahmeraum (5) ausbildet, in dem mindestens ein Filterelement (6) aufgenommen ist, wobei das Filterelement (6) ein Filtermedium (7) aufweist, welches blockartig ausgestaltet ist, **dadurch gekennzeichnet, dass** das Filtermedium (7) plissiert und zu einem Block (8) zusammengeschoben ist.

2. Filtermodul (1) nach Anspruch 1, **dadurch gekennzeichnet,**
**dass** der Block (8) frei von einem Rahmenelement angeordnet ist,
welches das Filtermodul fixiert.

3. Filtermodul (1) nach Anspruch 1 oder 2, **dadurch gekennzeichnet, dass** das Filterelement (6) eine Länge (L) im Bereich von 10 bis 100 mm aufweist.

4. Filtermodul (1) nach einem der Ansprüche 1 bis 3, **dadurch gekennzeichnet, dass** das Filtermedium (7) eine erste Schicht aufweist,
die als Trägerlage ausgebildet ist, und eine zweite Schicht aufweist, die ein Fluid adsorptiv reinigt.

5. Filtermodul (1) nach Anspruch 4, **dadurch gekennzeichnet, dass** das Filtermedium (7) aus einer ersten Schicht aus Vliesstoff besteht, auf welcher eine zweite Schicht aus Adsorbermaterial aufgebracht ist.

6. Filtermodul (1) nach einem der Ansprüche 1 bis 3, **dadurch gekennzeichnet, dass** das Filtermedium (7) als zu einem Block (8) gesintertes Material ausgestaltet ist.

7. Filtermodul (1) nach einem der Ansprüche 1 bis 6, **dadurch gekennzeichnet, dass** sich an das Filtermedium (7) einlassseitig und/ oder auslassseitig mindestens eine flächige Filterlage (9,10,11,12) anschließt bzw. anschließen.

8. Filtermodul (1) nach Anspruch 7, **dadurch gekennzeichnet, dass** mindestens eine Filterlage (11) mit dem Gehäuse (2) formschlüssig verbunden ist.

9. Filtermodul (1) nach Anspruch 7 oder 8, **dadurch gekennzeichnet, dass** die dem Einlass (3) zugewandte oberste Filterlage (11) als Grobfilter ausgestaltet ist.

10. Filtermodul (1) nach Anspruch 9 **dadurch gekennzeichnet, dass** sich an den Grobfilter ein Feinfilter anschließt.

11. Filtermodul (1) nach einem der Ansprüche 7 bis 10, **dadurch gekennzeichnet, dass** die dem Auslass (4) zugewandte unterste Filterlage (12) als Schutzlage ausgestaltet ist.

12. Filtermodul (1) nach einem der Ansprüche 1 bis 11, **dadurch gekennzeichnet, dass** das Gehäuse (2) einlassseitig mit einem Abdeckrahmen (13) versehen ist, welcher das Filterelement (6) innerhalb des Gehäuses (2) verliersicher fixiert.

13. Filtermodul (1) nach Anspruch 12, **dadurch gekennzeichnet, dass** der Abdeckrahmen (13) mit dem Gehäuse (2) formschlüssig und/oder stoffschlüssig verbunden ist.

14. Filtermodul (1) nach einem der vorangehenden Ansprüche, **dadurch gekennzeichnet, dass** der Abdeckrahmen (13) Fluideinlassöffnungen (21, 22) aufweist.

15. Filtermodul (1) nach einem der vorangehenden Ansprüche, **dadurch gekennzeichnet, dass** das Gehäuse (2) Rippen (16,17) aufweist, wobei ein Ende der Rippen (16, 17) in das Gehäuse (2) mündet und das andere Ende der Rippen (16, 17) frei vorliegt.

16. Verwendung eines Filtermodul (1) nach einem der vorangehenden Ansprüche in einer Brennstoffzelle.
